# EUROPEAN PATENT APPLICATION

(11) **EP 4 796 362 A1**
(43) Date of publication of application: **26.08.2026**
(21) Application number: 24878613.9
(22) Date of filing: 30.07.2024
(51) Int. Cl.: B60K 17/16

(54) **AXLE AND ALL-TERRAIN VEHICLE**

(30) Priority: 19.10.2023 CN 202322823390 U
(71) Applicant: Segway Technology Co., Ltd., Jiangsu 213000 (CN)
(72) Inventor: ZOU, Changwu, Changzhou, Jiangsu 213000 (CN)
(74) Representative: Manna, Sara
(86) International application number: PCT/CN2024/108617
(87) International publication number: WO 2025/081961

(57) **Abstract**

The present disclosure relates to an axle and an all-terrain vehicle. The axle comprises an axle housing, a differential assembly, a transmission assembly and an ABS signal output assembly. The differential assembly is arranged in the axle housing. The transmission assembly comprises a left driveshaft, a right driveshaft and a coupling sleeve. The left driveshaft and the right driveshaft are arranged on two opposite sides of the differential assembly, the coupling sleeve is mounted on the right driveshaft, and the coupling sleeve can move in the axial direction of the right driveshaft, so as to be coupled to and separated from the differential assembly. The ABS signal output assembly comprises a left signal wheel, a right signal wheel and a vehicle speed sensor. The left signal wheel is arranged in the axle housing and is connected to the left driveshaft. The right signal wheel is arranged in the axle housing and is connected to the coupling sleeve. The vehicle speed sensor penetrates the axle housing and is opposite to the left signal wheel and the right signal wheel.

## Description

### CROSS-REFERENCE TO RELATED APPLICATION

This application is based on and claims priority to Chinese Patent Application No. 202322823390.X, filed on October 19, 2023, the entire content of which is incorporated the present invention by reference.

### FIELD

The present invention relates to the field of vehicles, and more particularly to an axle and an all-terrain vehicle.

### BACKGROUND

Currently, an anti-lock braking system (ABS) is widely used in a vehicle. An electronic control unit of the ABS collects a vehicle speed signal through an ABS signal output structure. The ABS signal output structure is generally arranged on a wheel hub or an end of a half shaft adjacent to an axle. However, the above-mentioned ABS signal output structure is generally an exposed structure. Mud, sand, and small stones may easily envelop a signal wheel (a signal collector) or exacerbate wear on the signal wheel. Therefore, over time, an ABS signal source becomes increasingly unstable, which leads to a reduced reliability of the ABS. In related arts, manufacturers integrate the ABS signal output structure into the axle. However, the signal wheel is driven by an independent rotating shaft, which leads to a structurally redundant and larger axle, and increases production costs of the axle.

### SUMMARY

The present invention is intended to solve at least one of the problems existing in the related arts to at least some extent.

Accordingly, embodiments of the present invention propose an axle that may improve the output and reception stability of anti-lock braking system (ABS) signals, reduce the probability of damage to an ABS signal output assembly, has a compact structural design, and is beneficial for reducing production costs.

Embodiments of the present invention further propose an all-terrain vehicle.

An axle according to embodiments of the present invention includes: an axle housing; a differential assembly arranged within the axle housing; a transmission assembly including a left drive shaft, a right drive shaft, and a coupling sleeve, in which the left drive shaft and the right drive shaft are arranged at opposite sides of the differential assembly, the coupling sleeve is mounted to the right drive shaft and movable along an axial direction of the right drive shaft to engage with and disengage from the differential assembly; and an ABS signal output assembly including a left signal wheel, a right signal wheel, and a vehicle speed sensor, in which the left signal wheel is arranged within the axle housing and connected to the left drive shaft, the right signal wheel is arranged within the axle housing and connected to the coupling sleeve, and the vehicle speed sensor passes through the axle housing and faces the left signal wheel and the right signal wheel.

In the axle according to the embodiments of the present invention, both the left signal wheel and the right signal wheel are mounted in the axle housing, and the vehicle speed sensor passes through the axle housing and faces a signal tooth of the left signal wheel and a signal tooth of the right signal wheel, so that interference from the external environment on the ABS signal output assembly may be reduced, wear or even failure caused by exposure of the ABS signal output assembly may be avoided, and the output and reception stability of ABS signals may be improved. Additionally, since the left signal wheel shares a shaft body with the left drive shaft, and the right signal wheel is integrated on the coupling sleeve, the number of parts inside the axle may be reduced, which makes the structure of the axle more compact and is beneficial for reducing production costs of the axle.

In some embodiments, at least two vehicle speed sensors respectively correspond to the left signal wheel and the right signal wheel, each of the at least two vehicle speed sensors includes a sensor body and a speed measuring head connected to the sensor body, the speed measuring head passes through a mounting hole and faces the corresponding left signal wheel or right signal wheel, and the sensor body is arranged outside the axle housing and is connected to the axle housing via a fastener.

In some embodiments, the axle further includes a first sealing member arranged between the mounting hole and the speed measuring head; and/or, the axle further includes a second sealing member arranged between the axle housing and the left drive shaft.

In some embodiments, the differential assembly includes a differential case and a bevel gear, the bevel gear is arranged in the differential case, an end of the left drive shaft passes through the differential case and is non-rotatably connected to the bevel gear, and the left drive shaft is rotatable relative to the differential case.

In some embodiments, a circlip and a shim are further included, the circlip is mounted to the left drive shaft, a side of the left signal wheel abuts against the circlip, and the shim is mounted between the differential case and another side of the left signal wheel.

In some embodiments, the left signal wheel has a weight reduction groove opening toward an axial side of the left signal wheel and arranged in a circumferential direction of the left signal wheel.

In some embodiments, the transmission assembly further includes an output sleeve non-rotatably sleeved on the right drive shaft, the differential assembly includes a differential case and a side bevel gear, the side bevel gear passes through the differential case, and the coupling sleeve has a first position, a second position, and a third position. In the first position, the coupling sleeve is non-rotatably fitted only with the output sleeve; in the second position, the coupling sleeve is non-rotatably fitted with the output sleeve and the side bevel gear; and in the third position, the coupling sleeve is non-rotatably fitted with the output sleeve, the side bevel gear, and the differential case.

In some embodiments, an outer periphery of the output sleeve is provided with a first external spline, an outer periphery of the side bevel gear is provided with a second external spline, an inner wall of the coupling sleeve is provided with a first internal spline, and the first internal spline is configured to be non-rotatably fitted with the first external spline and the second external spline.

In some embodiments, an outer periphery of the coupling sleeve is provided with a third external spline, the third external spline constitutes the right signal wheel, an inner wall of the differential case is provided with a second internal spline, and the third external spline is configured to be non-rotatably fitted with the second internal spline; and/or, the left drive shaft is provided with a fourth external spline, and an inner ring of the left signal wheel is provided with a fourth internal spline, and the fourth external spline is non-rotatably fitted with the fourth internal spline.

An all-terrain vehicle according to another embodiment of the present invention includes the axle according to any one of the embodiments of the present invention.

In the all-terrain vehicle according to the embodiment of the present invention, both the left signal wheel and the right signal wheel are mounted in the axle housing, and the vehicle speed sensor passes through the axle housing and faces a signal tooth of the left signal wheel and a signal tooth of the right signal wheel, so that interference from the external environment on the ABS signal output assembly may be reduced, wear or even failure caused by exposure of the ABS signal output assembly may be avoided, and the output and reception stability of ABS signals may be improved. Additionally, since the left signal wheel shares a shaft body with the left drive shaft, and the right signal wheel is integrated on the coupling sleeve, the number of parts inside the axle may be reduced, which makes the structure of the axle more compact and is beneficial for reducing production costs of the axle.

### BRIEF DESCRIPTION OF THE DRAWINGS

FIG. 1 is a partial cross-sectional view of an axle according to an embodiment of the present invention.
FIG. 2 is a partial cross-sectional view of an axle according to an embodiment of the present invention, with a left drive shaft removed.
FIG. 3 is a front view of a left signal wheel of an axle according to an embodiment of the present invention.
FIG. 4 is a cross-sectional view taken along line A-A in FIG. 3.
FIG. 5 is a partial cross-sectional view of a left drive shaft of an axle according to an embodiment of the present invention.
FIG. 6 is another partial cross-sectional view of an axle according to an embodiment of the present invention.
FIG. 7 is an enlarged view of part A in FIG. 6.
FIG. 8 is a cross-sectional view showing the installation of a right drive shaft, an output sleeve, a coupling sleeve, and a side bevel gear of an axle according to an embodiment of the present invention.
FIG. 9 is a partial cross-sectional view of an axle according to an embodiment of the present invention, with a coupling sleeve in a first position.
FIG. 10 is a partial cross-sectional view of an axle according to an embodiment of the present invention, with a coupling sleeve in a second position.
FIG. 11 is a partial cross-sectional view of an axle according to an embodiment of the present invention, with a coupling sleeve in a third position.

### References signs:

1 axle housing; 11 mounting hole;
2 differential assembly; 21 differential case; 211 first through hole; 212 first oil groove; 213 second internal spline; 22 bevel gear; 23 side bevel gear; 231 second external spline;
3 transmission assembly; 31 left drive shaft; 311 fourth external spline; 312 shaft shoulder; 313 circlip; 314 shim; 32 right drive shaft; 33 output sleeve; 331 first external spline; 332 limiting flange; 34 coupling sleeve; 341 first internal spline; 342 third external spline; 343 groove; 35 driving member; 36 shift fork;
4 ABS signal output assembly; 41 left signal wheel; 411 second through hole; 412 fourth internal spline; 413 second oil groove; 414 weight reduction groove; 415 signal tooth; 42 vehicle speed sensor; 421 sensor body; 422 speed measuring head; 43 fastener; 44 right signal wheel;
51 first sealing member; 52 second sealing member;
6 ball cage;
7 constant velocity shaft.

### DETAILED DESCRIPTION

Embodiments of the present invention are described in detail below, examples of which are shown in the accompanying drawings. The following embodiments described with reference to the accompanying drawing are illustrative. It should be understood that the embodiments described are intended to explain the present invention, but not to limit the present invention.

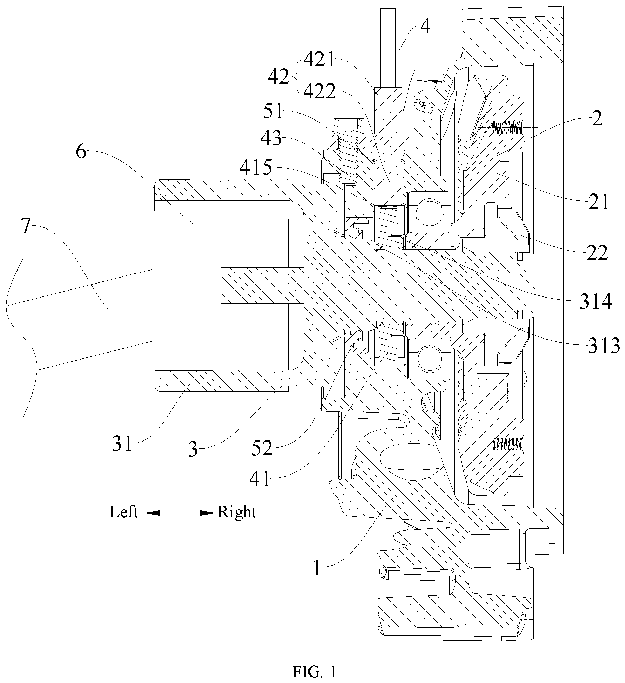

An axle and an all-terrain vehicle according to embodiments of the present invention are described below with reference to FIGS. 1 to 11.

As shown in FIGS. 1, 2, 6, and 7, an axle according to embodiments of the present invention includes an axle housing 1, a differential assembly 2, a transmission assembly 3, and an anti-lock braking system (ABS) signal output assembly 4. The differential assembly 2 is arranged within the axle housing 1. The transmission assembly 3 includes a left drive shaft 31, a right drive shaft 32, and a coupling sleeve 34. The left drive shaft 31 and the right drive shaft 32 are arranged at opposite sides of the differential assembly 2. The coupling sleeve 34 is mounted to the right drive shaft 32 and is movable along an axial direction of the right drive shaft 32 to engage with and disengage from the differential assembly 2. The ABS signal output assembly 4 includes a left signal wheel 41, a right signal wheel 44, and a vehicle speed sensor 42. The left signal wheel 41 is arranged within the axle housing 1 and connected to the left drive shaft 31. The right signal wheel 44 is arranged within the axle housing 1 and connected to the coupling sleeve 34. The vehicle speed sensor 42 passes through the axle housing 1 and faces the left signal wheel 41 and the right signal wheel 44.

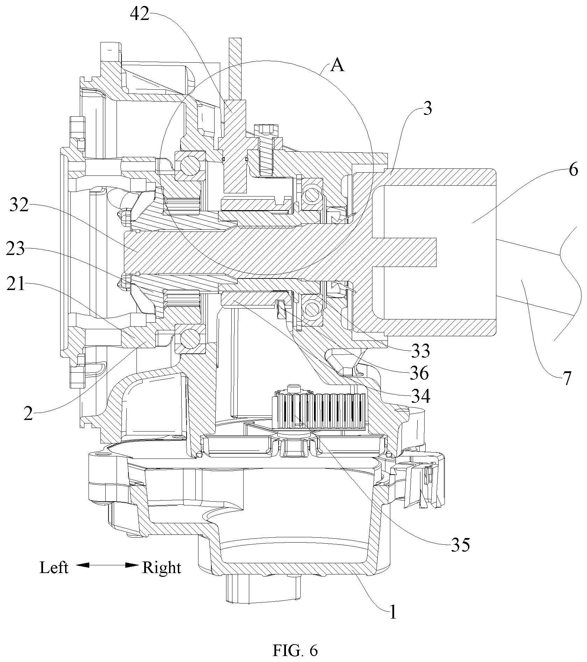

It may be understood that an end of the left drive shaft 31 (i.e., the right end of the left drive shaft 31 in FIG. 1) passes through the axle housing 1 and is connected to the differential assembly 2. Another end of the left drive shaft 31 (i.e., the left end of the left drive shaft 31 in FIG. 1) is connected to a ball cage 6 corresponding to the left drive shaft 31, and the ball cage 6 is connected to a constant velocity shaft 7. An end of the right drive shaft 32 (i.e., the left end of the right drive shaft 32 in FIG. 6) passes through the axle housing 1 and is connected to the differential assembly 2. Another end of the right drive shaft 32 (i.e., the right end of the left drive shaft 31 in FIG. 6) is connected to a ball cage 6 corresponding to the right drive shaft 32, and the ball cage 6 is connected to the constant velocity shaft 7.

In a case that the axle is operating, the left signal wheel 41 rotates synchronously with the left drive shaft 31, and the right signal wheel 44 rotates synchronously with the right drive shaft 32. The vehicle speed sensor 42 is configured to detect a rotational speed of the left signal wheel 41 and a rotational speed of the right signal wheel 44, so that a rotational speed transmitted from a vehicle to a wheel may be obtained through calculation. The vehicle speed sensor 42 may convert rotational speed information into an electronic signal and transmit the electronic signal to a corresponding controller.

In the axle according to the embodiments of the present invention, both the left signal wheel 41 and the right signal wheel 44 are mounted within the axle housing 1, and the vehicle speed sensor 42 passes through the axle housing 1 and faces a signal tooth 415 of the left signal wheel 41 and a signal tooth 415 of the right signal wheel 44, so that interference from the external environment on the ABS signal output assembly 4 may be reduced, wear or even failure caused by exposure of the ABS signal output assembly 4 may be avoided, and the output and reception stability of ABS signals may be improved. Additionally, because the left signal wheel 41 shares a shaft body with the left drive shaft 31, and the right signal wheel 44 is integrated on the coupling sleeve 34, the number of parts inside the axle may be reduced, which makes the structure of the axle more compact and is beneficial for reducing production costs of the axle.

Optionally, at least two vehicle speed sensors 42 are provided and respectively correspond to the left signal wheel 41 and the right signal wheel 44. Each of the at least two vehicle speed sensors 42 includes a sensor body 421 and a speed measuring head 422 connected to the sensor body 421. The speed measuring head 422 passes through a mounting hole 11 and faces the corresponding left signal wheel 41 or right signal wheel 44. The sensor body 421 is arranged outside the axle housing 1 and is connected to the axle housing 1 via a fastener 43. It may be understood that the left signal wheel 41 corresponds to one of the at least two vehicle speed sensors 42, and the right signal wheel 44 corresponds to another of the at least two vehicle speed sensors 42, so that a rotational speed at two power output ends of the axle may be measured.

Taking the left signal wheel 41 as an example, an axial direction of the mounting hole 11 corresponding to the left signal wheel 41 is consistent with a radial direction of the left signal wheel 41, and an inner end of the mounting hole 11 faces the signal tooth 415 on a peripheral wall of the left signal wheel 41. The speed measuring head 422 is arranged within the mounting hole 11, which may reduce external interference and improve a detection stability of the speed measuring head 422.

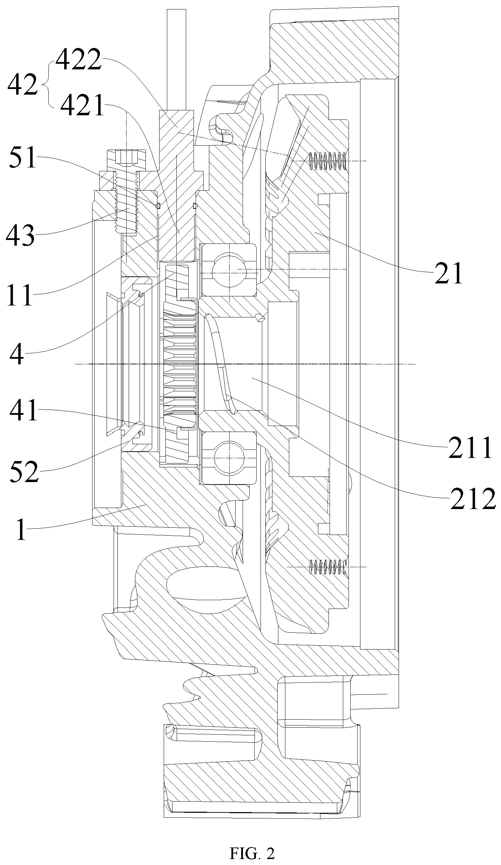

For example, as shown in FIGS. 1 and 2, the fastener 43 is a threaded member, and the threaded member passes through the sensor body 421 and is screwed into the axle housing 1 to fix the vehicle speed sensor 42. By connecting the vehicle speed sensor 42 in the above manner, the axle according to the embodiments of the present invention may facilitate assembly and disassembly of the vehicle speed sensor 42 by an operator.

Optionally, as shown in FIGS. 1 and 2, the axle further includes a first sealing member 51 arranged between the mounting hole 11 and the speed measuring head 422. For example, the first sealing member 51 is an elastic sealing ring sleeved on the speed measuring head 422, so that a probability of sewage or dust entering the axle housing 1 through a gap between the mounting hole 11 and the speed measuring head 422 may be reduced, thus improving a dust-proof and sealing effect of the axle.

Optionally, as shown in FIGS. 1 and 2, the axle further includes a second sealing member 52 arranged between the axle housing 1 and the left drive shaft 31 (or the right drive shaft 32). In other words, the second sealing member 52 on the left drive shaft 31 is arranged at a side of the left signal wheel 41 facing away from the differential assembly 2. The second sealing member 52 on the right drive shaft 32 is arranged at a side of the right signal wheel 44 facing away from the differential assembly 2.

For example, the second sealing member 52 is a sealing ring arranged at a pivotal position between the axle housing 1 and the left drive shaft 31 (or the right drive shaft 32). By providing the second sealing member 52, the axle according to embodiments of the present invention may, on one hand, prevent sewage or dust from entering the axle housing 1 through a gap between the axle housing 1 and the left drive shaft 31 (or the right drive shaft 32), and on the other hand, prevent lubricant inside the axle housing 1 from leaking to the outside through the gap between the axle housing 1 and the left drive shaft 31 (or the right drive shaft 32).

In some embodiments, as shown in FIGS. 1 and 2, the differential assembly 2 includes a differential case 21 and a bevel gear 22. The bevel gear 22 is arranged in the differential case 21. An end of the left drive shaft 31 (i.e., the right end of the left drive shaft 31 in FIG. 1) passes through the differential case 21 and is non-rotatably connected to the bevel gear 22. The left drive shaft 31 is rotatable relative to the differential case 21. It may be understood that the left drive shaft 31 and the bevel gear 22 are relatively fixed and rotate synchronously, while a differential motion may occur between the differential case 21 and the left drive shaft 31.

As shown in FIG. 1, the axle further includes a circlip 313 and a shim 314. The circlip 313 is mounted to the left drive shaft 31. A side of the left signal wheel 41 (i.e., the left side of the left signal wheel 41 in FIG. 1) abuts against the circlip 313. The shim 314 is mounted between another side of the left signal wheel 41 (i.e., the right side of the left signal wheel 41 in FIG. 1) and the differential case 21. It may be understood that the left drive shaft 31 has an annular groove, and the circlip 313 is mounted in the annular groove. The left drive shaft 31 is provided with a shaft shoulder 312, and the circlip 313 is mounted between the shaft shoulder 312 and the left signal wheel 41. The circlip 313 may axially limit the left signal wheel 41. The shim 314 is arranged between the left signal wheel 41 and the differential case 21, which may prevent wear of the left signal wheel 41 and the differential case 21 when the left signal wheel 41 and the differential case 21 rotate relative to each other, and thus extend the service life of the axle.

Optionally, as shown in FIG. 2, the differential case 21 has a first through hole 211, and the left drive shaft 31 rotatably passes through the first through hole 211. An inner wall of the first through hole 211 has a first oil groove 212 extending along an axial direction of the first through hole 211. It may be understood that the first oil groove 212 extends to two axial ends of the first through hole 211 respectively. The first oil groove 212 may extend in a spiral form or in a straight line. By providing the first oil groove 212, the axle according to embodiments of the present invention may facilitate the passage of lubricating oil through the differential case 21, thereby slowing down wear of the differential case 21 and helping to extend the service life of the axle.

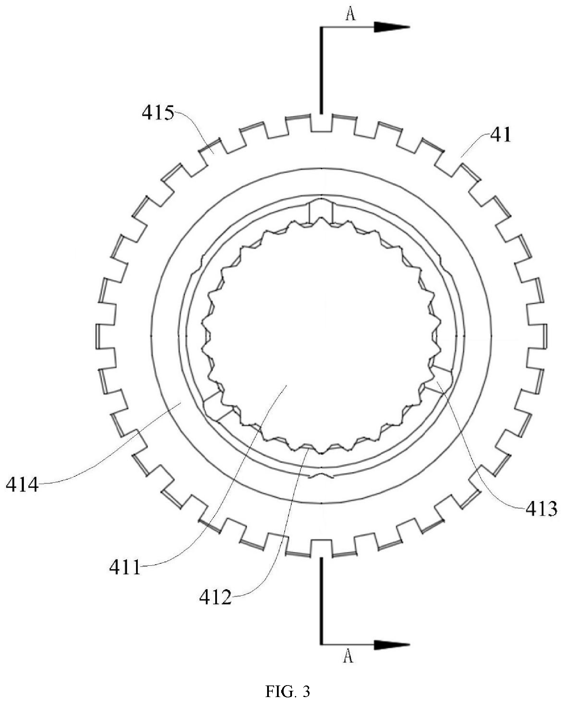

Optionally, as shown in FIG. 3, the left signal wheel 41 has a second through hole 411. The left drive shaft 31 non-rotatably passes through the second through hole 411. An inner wall of the second through hole 411 has a second oil groove 413 extending along an axial direction of the second through hole 411. It may be understood that the second oil groove 413 extends to two axial ends of the second through hole 411 respectively. The second oil groove 413 may extend in a spiral form or in a straight line. For example, a plurality of the second oil grooves 413 are arranged at intervals in a circumferential direction of the second through hole 411. By providing the second oil groove 413, the axle according to embodiments of the present invention may facilitate the passage of lubricating oil through the left signal wheel 41, thereby slowing down wear of the left signal wheel 41 and helping to extend the service life of the axle.

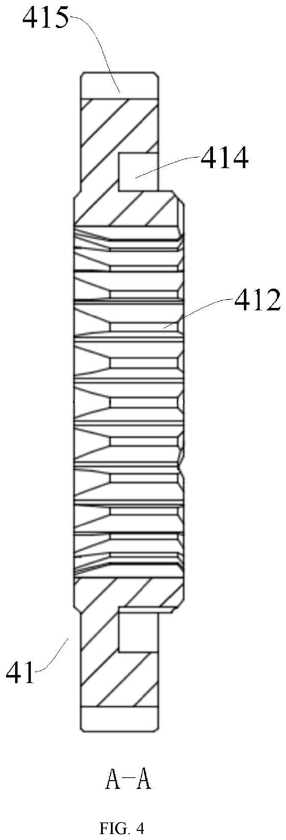

In some embodiments, as shown in FIGS. 3 and 4, the left signal wheel 41 has a weight reduction groove 414. The weight reduction groove 414 opens toward an axial side of the left signal wheel 41 and is arranged in a circumferential direction of the left signal wheel 41. It may be understood that the weight reduction groove 414 has an annular structure, and an axis of the weight reduction groove 414 is collinear with an axis of the left signal wheel 41. For example, the weight reduction groove 414 opens at a side facing the differential case 21. By providing the weight reduction groove 414, the axle according to embodiments of the present invention may reduce the weight of the left signal wheel 41, thereby helping to reduce the overall weight of the axle and lowering production costs of the axle.

In some embodiments, as shown in FIGS. 6 to 8, the transmission assembly 3 further includes an output sleeve 33 non-rotatably sleeved on the right drive shaft 32. The differential assembly 2 includes a differential case 21 and a side bevel gear 23. The side bevel gear 23 passes through the differential case 21. The coupling sleeve 34 has a first position, a second position, and a third position. In the first position, the coupling sleeve 34 is non-rotatably fitted only with the output sleeve 33. In the second position, the coupling sleeve 34 is non-rotatably fitted with the output sleeve 33 and the side bevel gear 23. In the third position, the coupling sleeve 34 is non-rotatably fitted with the output sleeve 33, the side bevel gear 23, and the differential case 21.

It may be understood that an axial movement of the coupling sleeve 34 does not affect signal acquisition of the right signal wheel 44 by the vehicle speed sensor 42. In other words, regardless of a position to which the coupling sleeve 34 moves, the vehicle speed sensor 42 always faces the right signal wheel 44 on the coupling sleeve 34.

In the axle according to the embodiments of the present invention, the coupling sleeve 34 is axially movable relative to the output sleeve 33 to engage with and disengage from the differential assembly 2, so that switching between a two-wheel drive operating mode and a four-wheel drive operating mode of the vehicle may be achieved. Additionally, since the right signal wheel 44 is arranged on an outer periphery of the coupling sleeve 34, and the vehicle speed sensor 42 passes through the axle housing 1 and faces the right signal wheel 44, the right signal wheel 44 and the coupling sleeve 34 may be integrated into a single part, thereby reducing the number of parts inside the axle, making the structure of the axle more compact, and helping reduce production costs of the axle. Moreover, since the right signal wheel 44 is arranged within the axle housing 1, interference from the external environment on the ABS signal output structure (or the right signal wheel 44 and the vehicle speed sensor 42) may be reduced, and wear or even failure caused by exposure of the ABS signal output structure may avoided.

It may be understood that the right signal wheel 44 may be sleeved on the coupling sleeve 34 in a form of a gear ring, or may be integrally formed on the coupling sleeve 34. In embodiments of the present invention, the right signal wheel 44 is integrally formed with the coupling sleeve 34, which facilitates the manufacturing of the axle, and offers convenient assembly and low costs.

In some embodiments, as shown in FIGS. 6 to 11, the differential assembly 2 further includes a side bevel gear 23 extending through a differential case 21. The coupling sleeve 34 has a first position and a second position. In the first position, the coupling sleeve 34 is non-rotatably fitted only with the output sleeve 33. In the second position, the coupling sleeve 34 is non-rotatably fitted with the output sleeve 33 and the side bevel gear 23. It may be understood that in a case that the coupling sleeve 34 is in the first position, the axle is in a two-wheel drive mode, i.e., the transmission assembly 3 idles and does not drive the differential assembly 2 to rotate. In a case that the coupling sleeve 34 is in the second position, the axle is in a four-wheel drive mode, i.e., the transmission assembly 3 may drive the side bevel gear 23 to rotate synchronously, and a differential motion may occur between the differential case 21 and the side bevel gear 23.

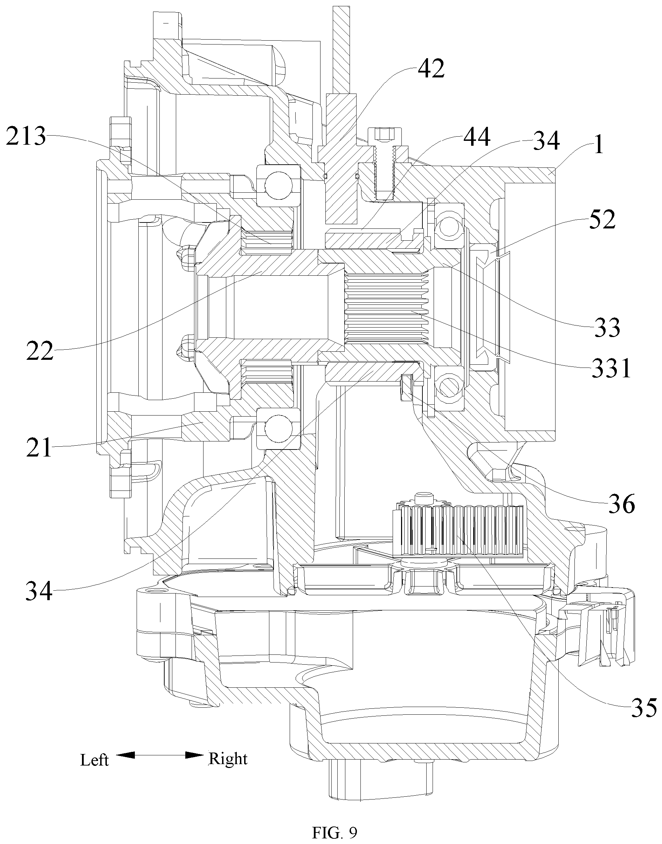

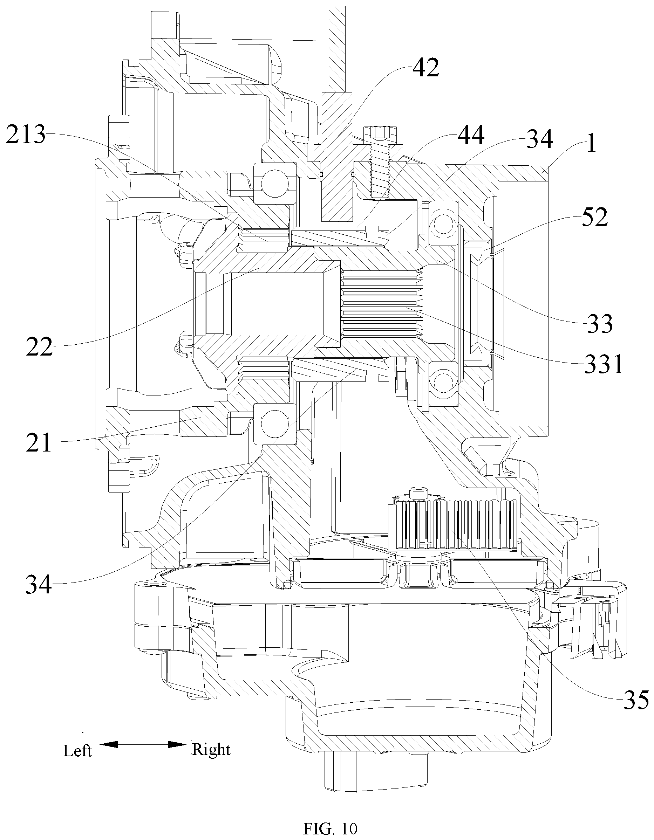

Optionally, as shown in FIGS. 9 and 10, an outer periphery of the output sleeve 33 is provided with a first external spline 331, an outer periphery of the side bevel gear 23 is provided with a second external spline 231, and an inner wall of the coupling sleeve 34 is provided with a first internal spline 341. The first internal spline 341 may be non-rotatably fitted with the first external spline 331 and the second external spline 231. It may be understood that in a case that the coupling sleeve 34 is in the first position, the first internal spline 341 is non-rotatably fitted with the first external spline 331. In a case that the coupling sleeve 34 is in the second position, the first internal spline 341 is non-rotatably fitted with both the first external spline 331 and the second external spline 231. By adopting the above structural arrangement, the axle according to embodiments of the present invention may ensure a stable transmission among the output sleeve 33, the coupling sleeve 34 and the differential assembly 2, has a simple structure, and facilitates processing and manufacturing.

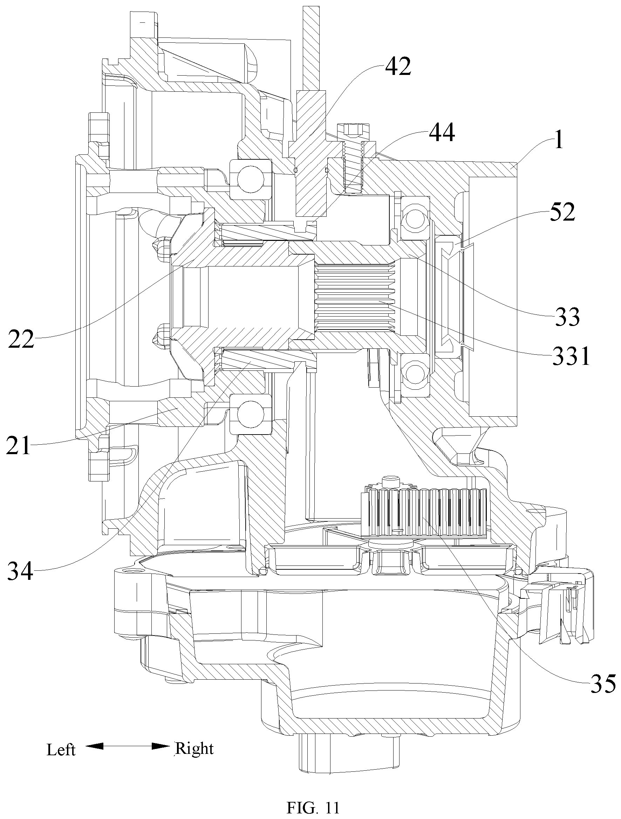

Optionally, as shown in FIG. 11, the coupling sleeve 34 further has a third position. In the third position, the coupling sleeve 34 is non-rotatably fitted with the output sleeve 33, the side bevel gear 23, and the differential case 21. It may be understood that in a case that the coupling sleeve 34 is in the third position, the side bevel gear 23 and the differential case 21 are locked, so that the side bevel gear 23 and the bevel gear 22 in the differential case 21 are locked together as an integral unit. The transmission assembly 3 may drive the bevel gear 22 and the side bevel gear 23 to rotate at a same speed, so that power output to wheels on both sides of the vehicle is consistent.

For example, as shown in FIGS. 6 to 8, the outer periphery of the coupling sleeve 34 is provided with a third external spline 342, and the third external spline 342 is configured as the right signal wheel 44. The inner wall of the differential case 21 is provided with a second internal spline 213. The third external spline 342 may be non-rotatably fitted with the second internal spline 213. By adopting the above structural arrangement, the axle according to embodiments of the present invention may ensure a stable transmission among the output sleeve 33, the coupling sleeve 34, and the differential assembly 2, has a simple structure, and facilitates processing and manufacturing. Additionally, the third external spline 342 configured as the right signal wheel 44 facilitates manufacturing of the coupling sleeve 34 and helps reduce production costs of the axle.

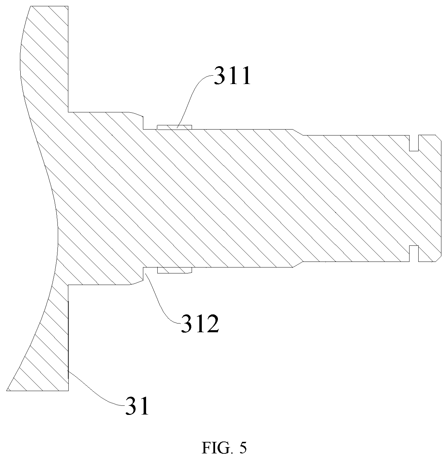

Optionally, as shown in FIGS. 4 and 5, the left drive shaft 31 is provided with a fourth external spline 311, and an inner ring of the left signal wheel 41 is provided with a fourth internal spline 412. The fourth external spline 311 is non-rotatably fitted with the fourth internal spline 412. By connecting the left drive shaft 31 and the left signal wheel 41 in the above manner, the axle according to embodiments of the present invention may facilitate installation and disassembly of the left drive shaft 31 by an operator. Moreover, the spline connection may ensure a more reliable connection and good synchronization between the left signal wheel 41 and the left drive shaft 31.

The right drive shaft 32 passes through the output sleeve 33 and the side bevel gear 23. The right drive shaft 32 is non-rotatably fitted with the output sleeve 33, and is rotatably fitted with the side bevel gear 23, i.e., the right drive shaft 32 is connected with the side bevel gear 23 in a clearance fit, allowing relative rotation between the right drive shaft 32 and the side bevel gear 23. It may be understood that an end of the right drive shaft 32 passes through the axle housing 1 and is connected to the output sleeve 33 and the side bevel gear 23, while another end of the right drive shaft 32 is connected to the ball cage 6, and the ball cage 6 is connected to the constant velocity shaft 7. By passing the right drive shaft 32 through the side bevel gear 23, the axle according to embodiments of the present invention may provide a rotational support for the side bevel gear 23, which is beneficial for improving a transmission stability of the axle.

For example, the output sleeve 33 and the side bevel gear 23 may be rotatably connected using a male spigot and female spigot arrangement, which may provide axial and radial positioning for the side bevel gear 23, thus further improving the transmission stability of the axle.

Optionally, as shown in FIGS. 6 and 9, the axle further includes a driving member 35 and a shift fork 36. The shift fork 36 is connected to the coupling sleeve 34. The driving member 35 is connected to the shift fork 36. The driving member 35 may drive the shift fork 36 to move along an axial direction of the output sleeve 33, so as to drive the coupling sleeve 34 to move among the first position, the second position, and the third position. Specifically, the outer periphery of the coupling sleeve 34 has a groove 343, and the shift fork 36 is mounted in the groove 343 to be relatively fixed to the coupling sleeve 34. For example, the driving member 35 may transmit motion in a form of a rack and pinion, and a specific structure of the driving member 35 is not limited in the present application.

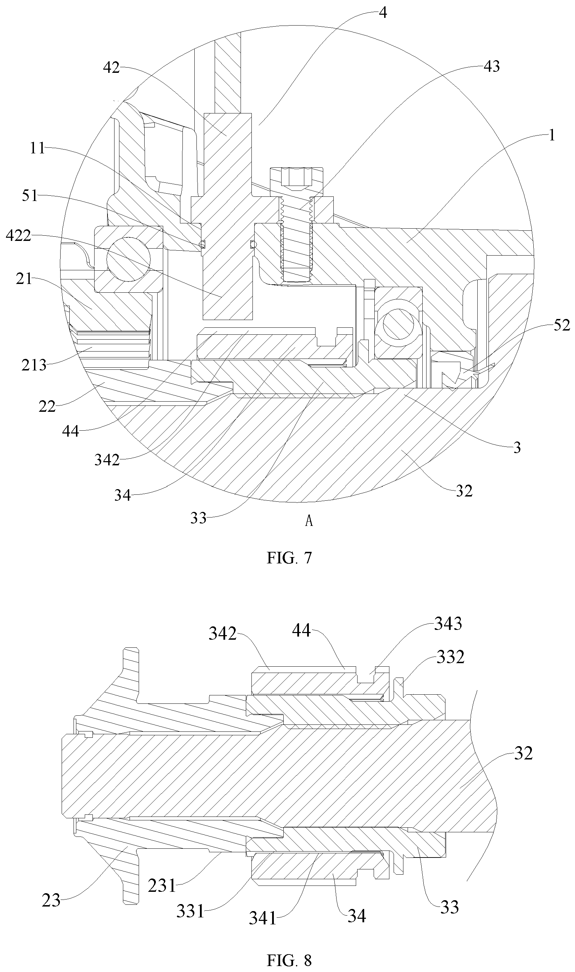

Optionally, as shown in FIG. 8, the outer periphery of the output sleeve 33 is provided with a limiting flange 332 arranged at a side of the coupling sleeve 34 facing away from the differential assembly 2. The coupling sleeve 34 may abut against the limiting flange 332, thereby limiting the movement position of the coupling sleeve 34 and improving the movement accuracy of the coupling sleeve 34.

An all-terrain vehicle according to another embodiment of the present invention includes the axle according to the present invention.

In the all-terrain vehicle according to the embodiment of the present invention, both the left signal wheel 41 and the right signal wheel 44 are mounted in the axle housing 1, and the vehicle speed sensor 42 passes through the axle housing 1 and faces the signal tooth 415 of the left signal wheel 41 and the signal tooth 415 of the right signal wheel 44, so that interference from the external environment on the ABS signal output assembly 4 may be reduced, wear or even failure caused by exposure of the ABS signal output assembly 4 may be avoided, and the output and reception stability of ABS signals may be improved. Additionally, since the left signal wheel 41 shares a shaft body with the left drive shaft 31, and the right signal wheel 44 is integrated on the coupling sleeve 34, the number of parts inside the axle may be reduced, which makes the structure of the axle more compact and is beneficial for reducing production costs of the axle.

In the description of the present invention, it should be understood that the orientation or position relationship indicated by terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present invention and simplifying the description, and does not indicate or imply that the referred device or element must have a specific orientation, and be constructed and operated in a specific orientation, so it cannot be understood as a limitation of the present invention.

In addition, terms "first" and "second" are only used for purpose of description, and cannot be understood as indicating or implying relative importance or implicitly indicating the number of indicated technical features. Therefore, the feature defined as the "first" or the "second" may explicitly or implicitly include at least one such feature. In the description of the present invention, "a plurality of" means at least two, such as two, three, etc., unless otherwise specifically defined.

In the present invention, unless otherwise expressly defined, terms such as "install/mount", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present invention may be understood according to the specific situations.

In the present invention, unless otherwise expressly defined, a first feature "below", "under", "on bottom of", "above", "on", or "on top of" a second feature may include an embodiment in which the first feature is in direct contact with the second feature, or the first feature is in indirect contact with the second feature through an intermediate media. And, a first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present invention, terms such as "an embodiment", "some embodiments", "an example", "a specific example" or "some examples" means that a particular feature, structure, material, or characteristic described in connection with the embodiment or example is included in at least one embodiment or example of the present invention. Thus, the appearances of these terms in various places throughout this specification are not necessarily referring to the same embodiment or example of the present invention. Furthermore, the particular features, structures, materials, or characteristics may be combined in one or more embodiments or examples in any suitable manner. In addition, without contradiction, those skilled in the art may combine and unite different embodiments or examples or features of the different embodiments or examples described in this specification.

Although the above embodiments have been shown and described, it may be understood that the above embodiments are illustrative and shall not be understood as limitation to the present invention, and changes, modifications, alternatives and variations made to the above embodiments by those skilled in the art all fall within the protection scope of the present invention.

## Claims

1. An axle, comprising:
an axle housing;
a differential assembly arranged within the axle housing;
a transmission assembly comprising a left drive shaft, a right drive shaft, and a coupling sleeve, wherein the left drive shaft and the right drive shaft are arranged at opposite sides of the differential assembly, and the coupling sleeve is mounted to the right drive shaft and movable along an axial direction of the right drive shaft to engage with and disengage from the differential assembly; and
an anti-lock braking system (ABS) signal output assembly comprising a left signal wheel, a right signal wheel, and a vehicle speed sensor, wherein the left signal wheel is arranged within the axle housing and connected to the left drive shaft, the right signal wheel is arranged within the axle housing and connected to the coupling sleeve, and the vehicle speed sensor passes through the axle housing and faces the left signal wheel and the right signal wheel.

2. The axle according to claim 1, wherein at least two vehicle speed sensors respectively correspond to the left signal wheel and the right signal wheel, each of the at least two vehicle speed sensors comprises a sensor body and a speed measuring head connected to the sensor body, the speed measuring head passes through a mounting hole and faces the corresponding left signal wheel or right signal wheel, and the sensor body is arranged outside the axle housing and is connected to the axle housing via a fastener.

3. The axle according to claim 2, wherein the axle further comprises a first sealing member arranged between the mounting hole and the speed measuring head; and/or
the axle further comprises a second sealing member arranged between the axle housing and the left drive shaft.

4. The axle according to any one of claims 1 to 3, wherein the differential assembly comprises a differential case and a bevel gear, the bevel gear is arranged within the differential case, an end of the left drive shaft passes through the differential case and is non-rotatably connected to the bevel gear, and the left drive shaft is rotatable relative to the differential case.

5. The axle according to claim 4, further comprising a circlip and a shim, wherein the circlip is mounted to the left drive shaft, a side of the left signal wheel abuts against the circlip, and the shim is mounted between the differential case and another side of the left signal wheel.

6. The axle according to any one of claims 1 to 5, wherein the left signal wheel has a weight reduction groove opening toward an axial side of the left signal wheel and arranged in a circumferential direction of the left signal wheel.

7. The axle according to any one of claims 1 to 6, wherein the transmission assembly further comprises an output sleeve non-rotatably sleeved on the right drive shaft, the differential assembly comprises a differential case and a side bevel gear, the side bevel gear passes through the differential case, and the coupling sleeve has a first position, a second position, and a third position,
wherein in the first position, the coupling sleeve is only non-rotatably fitted with the output sleeve; in the second position, the coupling sleeve is non-rotatably fitted with the output sleeve and the side bevel gear; and in the third position, the coupling sleeve is non-rotatably fitted with the output sleeve, the side bevel gear and the differential case.

8. The axle according to claim 7, wherein an outer periphery of the output sleeve is provided with a first external spline, an outer periphery of the side bevel gear is provided with a second external spline, an inner wall of the coupling sleeve is provided with a first internal spline, and the first internal spline is configured to be non-rotatably fitted with the first external spline and the second external spline.

9. The axle according to claim 8, wherein an outer periphery of the coupling sleeve is provided with a third external spline, the third external spline is configured as the right signal wheel, an inner wall of the differential case is provided with a second internal spline, and the third external spline is configured to be non-rotatably fitted with the second internal spline; and/or
the left drive shaft is provided with a fourth external spline, and an inner ring of the left signal wheel is provided with a fourth internal spline, and the fourth external spline is non-rotatably fitted with the fourth internal spline.

10. An all-terrain vehicle, comprising the axle according to any one of claims 1 to 9.
